# EUROPEAN PATENT APPLICATION

(11) **EP 2 732 696 A1**
(43) Date of publication of application: **21.05.2014**
(21) Application number: 13192429.2
(22) Date of filing: 12.11.2013
(51) Int. Cl.: A01G 3/00

(54) **Chopping apparatus**

(30) Priority: 15.11.2012 GB 201220581
(71) Applicant: Wright, Richard Martin, Norfolk NR28 0PX (GB)
(72) Inventor: Wright, Richard Martin, Norfolk NR28 0PX (GB)
(74) Representative: Wilson, Peter David George

(57) **Abstract**

Chopping apparatus (21) having two rotatable assemblies (7, 8), one assembly being a blade assembly having a plurality of elongate blades (5) arranged about the surface of a notional cylinder (9), the other being either a like blade assembly or a roller. The blades have a cutting edge aligned substantially tangentially to the cylinder, and the rotatable assemblies are arranged adjacent each other on substantially parallel axes (16). Each assembly is driven to rotate about its cylindrical axis.

## Description

### Field of the Invention

The invention relates to apparatus for chopping, slicing or otherwise disrupting materials, especially those of biological origin such as root crops and seed capsules. In particular, the apparatus relates to such systems where the materials are contaminated with non-comminutable materials such as stones. Also in particular, the invention relates to apparatus configured to carry out such chopping in an agricultural environment.

### Background and Prior Art

It is often required to chop materials such as root crops like potatoes, in an agricultural environment, for example to feed such material to cattle. The materials have often been dug from the ground and are stored in bins on the farmyard. As the materials are not destined for human food consumption, they will not usually have been cleaned, or separated from natural contaminants such as stones.

In other situations, it is required to chop up materials such as waste trimmings from crops after the main edible product has been removed. Examples of this might include potato waste, after the tubers have been harvested, or the tops of pea and bean plants following harvesting of the seed pods. The comminution of such material might be required prior to using the material as animal feed, or as a precursor to further processing such as compositing, or use of the material in renewable energy production.

In further situations, it is required to split open seed capsules, such as those of poppies (*Papaver spp.*), in order to allow the seeds themselves to be removed.

In all these situations, it is common that the starting material might be mixed with stones or other resistant material, and that it is either impractical or not cost-effective to effect a separation operation prior to comminution of the material or disruption of the seed cases.

A number of systems have been used for such comminution operations. In a first system, an auger is used to transport material towards an array of static blades, often arranged radially in a circular fashion, and defining a number of sectors of a circle, the boundaries of each sector being defined by the blades. Other arrangements of blades have been used, such as square arrays. Such systems are not able to function well in the presence of stones mixed in with the materials, and the stones tend to become wedged between the blades causing blockage to the equipment, damage to the blades, and the production of crushed, rather than chopped end product. The crushing of the biological material leads to an overly-wet product, further blockages and the risk of rapid microbial decay and enzymatic degradation of the product.

Other systems employed rely on propelling material towards a rotating array of blades arranged radially in a circular plane, the cutting edges of the blades being aligned generally in the plane of the array. The rapid rotation of the blade array slices material from the end of the feedstock, the imparted kinetic energy also serving to eject the material from the copping apparatus. This type of equipment is often used to chop woody material such as tree prunings, the branches being propelled towards the rotating blades by a pair of driving rollers. Such systems are again not able to function with the presence of stones, and have an inherent tendency to clog should the feedstock material be soft.

In a yet further system, developed by the inventor, material is passed between a pair of rollers - one driven to rotate at a constant speed and one free-running - that have an array of blades disposed on their surface. Cooperation between the driven and free-running rollers causes material to be chopped. Material may be fed between the opposed rollers by means of an auger. Whilst this has proved successful for some feedstock materials, is has been unable to function with feedstock material that is particularly soft or wet (e.g. potato plant waste) or for cracking open seed capsules such as poppy.

It is amongst the objects of the present invention at attempt a solution to these problems.

### Summary of the Invention

Accordingly, the invention provides chopping apparatus comprising: a first and second rotatable assembly, said first rotatable assembly comprising a blade assembly having a plurality of elongate blades arranged about the surface of a notional cylinder, said blades having a cutting edge aligned substantially tangentially to said cylinder; and said second rotatable assembly comprising either a like blade assembly or a roller; said rotatable assemblies being arranged adjacent each other on substantially parallel axes of rotation; and a drive to rotate each assembly about its cylindrical axis.
In typical arrangements, the rotatable assemblies have a diameter of about 250mm. It is envisaged that such assemblies might have a diameter from about 25mm or 50mm up to a diameter of about 300mm, 400mm or even 500mm. Preferably, each rotatable assembly is of substantially the same length.

The inventor has found that the provision of such apparatus where both blade assemblies are driven has a surprising effect of enabling the apparatus to disrupt brittle material, such as seed capsules, as well as being able to slice softer material such as root vegetable and aerial plant parts. The provision of a roller as one of the rotatable assemblies has the effect of positively urging material to be chopped against the moving blades of the first assembly.

In preferred embodiments, said second rotatable assembly is also a like blade assembly, rather than a roller. This has particular application in processing wet material such as fresh plant-derived matter.

Preferably, said assemblies are resiliently biased towards each other whilst constrained to have a minimum separation between each assembly. This allows the assemblies to be pushed apart from each other should a hard foreign body such as a stone be present in the feedstock material. A typical minimum separation is about 2mm, but it is envisaged that such a separation might be as small as 1mm, or as large as about 5mm or even 10mm for some applications.

In any such apparatus it is preferred that one such assembly (and particularly only one such assembly) has a variable speed drive. The provision of such a variable speed drive allows the cutting apparatus to be tuned on-site to the particular requirements of material to be chopped, thereby making the apparatus more versatile.

In particularly preferred embodiments, each assembly has a variable speed drive.

In any such apparatus, it is also preferred that one (only) assembly has a reversible drive. The provision of such a reversible drive leads to a number of benefits - by allowing the assemblies to be operated in a counter-rotating mode or a co-rotating mode, a wide range of shearing actions can be performed, thereby further increasing the versatility of apparatus. Furthermore, the provision of one (or more) reversible drives allows the apparatus to be operated in a reverse mode that is particularly useful for clearing blockages, in the unlikely event that they occur. More preferably, each assembly has a reversible drive.

Also in any such apparatus, it is preferred that the apparatus further comprises an auger configured to deliver material, in use, between said first and second assemblies. Preferably, the axis of rotation of said auger is substantially parallel to the axes of said assemblies and said auger further comprises a paddle configured to push material, in use, between said first and second assemblies.

Also in any such apparatus it is preferred to further provide a loading bucket wherein the interior of said loading bucket is in operable communication with said assemblies. In this way, material to be chopped may be stored for feeding into the chopping region of the apparatus.

Where an auger is provided, it is preferred that the apparatus also further comprises a loading bucket wherein the interior of said loading bucket is in operable communication with said assemblies, and wherein said auger is located at least partly within the interior of said loading bucket. The part-location of the auger in the loading bucket then has the additional function of mixing material within the bucket, increasing homogeneity of the material and preventing size separation that might otherwise occur in high-vibration environments.
In any such apparatus, it is preferred that said elongate blades are located on the surface of cylindrical shell. In particularly preferred embodiments, said elongate blades are arranged helically.

Also in any such apparatus, it is preferred that each assembly is independently driven. This allows the apparatus to be configured, at will and in use, and also adjusted during use, to provide a range of cutting modalities to suit the material being processed. Co-rotation and counter-rotation modes may be selected depending whether e.g. a slicing or cracking operation is required.

Also included within the scope of the invention is apparatus substantially as described herein with reference to and as illustrated by any appropriate combination of the accompanying drawings.

### Brief Description of the Figures

The invention is described with reference to the attached drawings, in which:
Figure 1 is a schematic diagram of a prior art device;
Figures 2 and 3 illustrate in cross-sectional view, blade assemblies forming part of the invention;
Figure 4 shows a detail of a blade for use in the present invention;
Figures 5 and 6 illustrate, in plan view, blade assemblies forming part of the invention;
Figure 7 illustrates, in cross-sectional view, an alternative blade assembly;
Figure 8 illustrates, in semi-schematic and cross-sectional view cutting apparatus of the invention;
Figures 9 and 10 illustrate, in side and end view respectively, cutting apparatus of the invention; and
Figure 11 illustrates, in cross-sectional view, embodiment of the invention comprising a blade assembly and a roller.

### Description of Preferred Embodiments

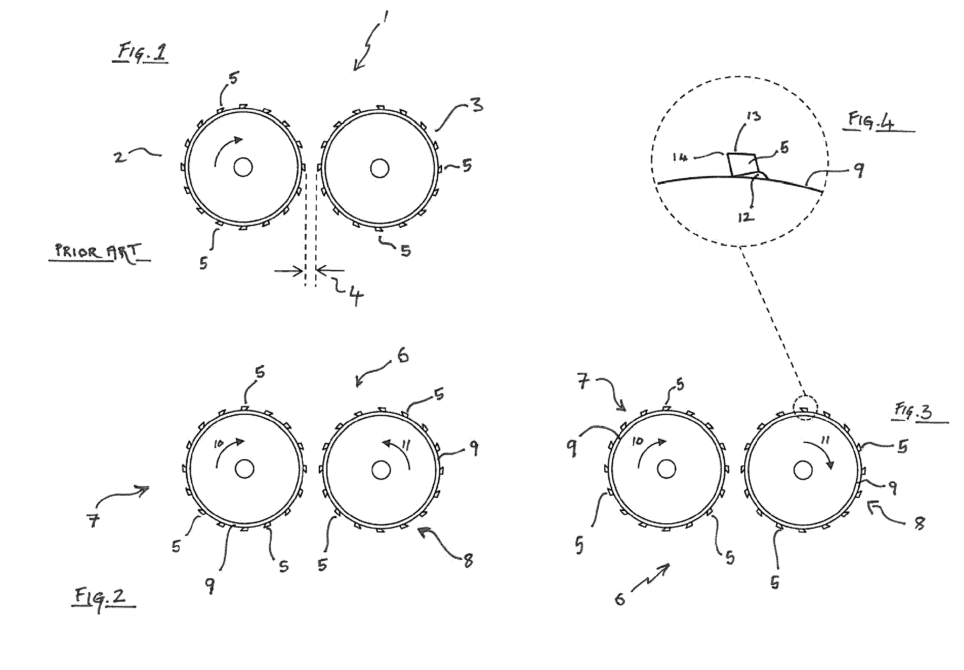

Figure 1 illustrates, in a cross-sectional view, a prior art chopping apparatus, generally indicated by 1. This apparatus comprises a first driven blade assembly 2, and a second, free-running blade assembly 3. The blade assemblies are arranged such that there is a gap 4 between the edges of the blades 5 on each assembly 2,3.

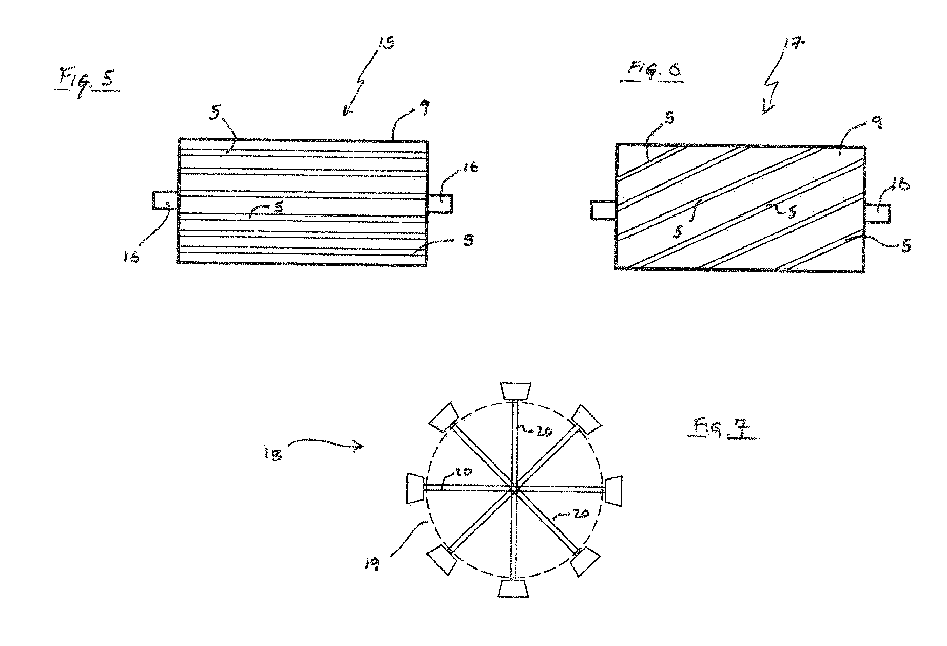

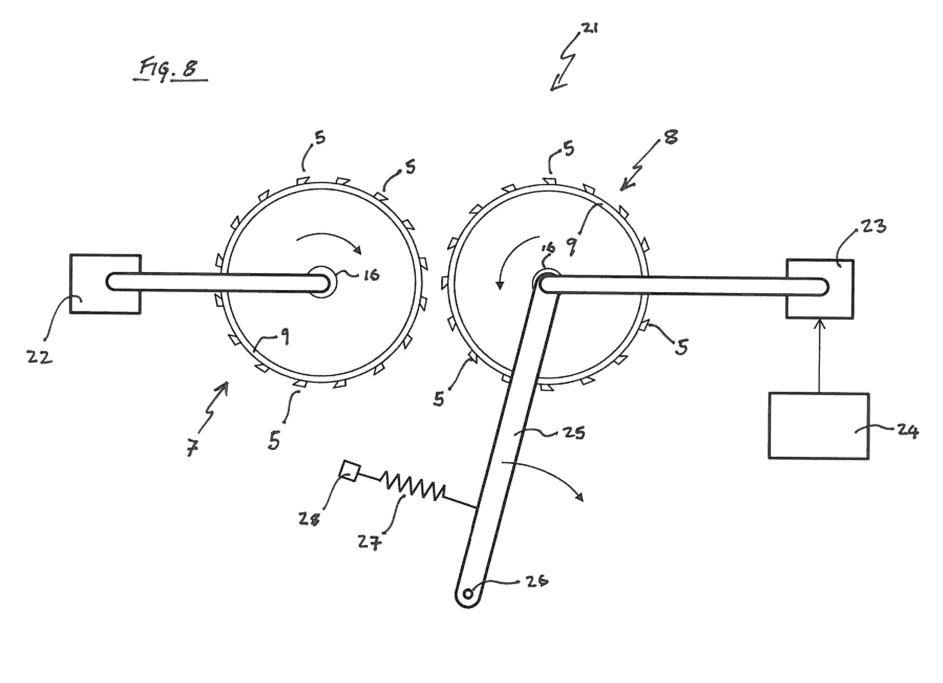

Figure 2 illustrates, again in cross-sectional view, an embodiment of a chopping apparatus according to the present invention, generally indicated by 6. The apparatus comprises a first blade assembly 7 and a second blade assembly 8. Each blade assembly 7, 8 comprises a plurality of blades 5 arranged about the surface of a notional cylinder. The cross-section of Figure 2 is taken perpendicular to the main axis of this notional cylinder. In this embodiment, the blades 5 of each blade assembly 7, 8 are arranged on the surface of a cylindrical shell 9. In other embodiments described herein (such as in Figure 7) no such shell is employed, the blades themselves defining the surface of a notional cylinder. Returning to the embodiment of Figure 2, each of the blade assemblies 7, 8 are driven to rotate about their respective axes by means of a drive (not illustrated). The rotational movement of each blade assembly 7, 8 is indicated by the arrows 10, 11. The axes of each blade assembly are substantially parallel to each other, the blade assemblies being arranged adjacent each other in a side-by-side fashion. In this example, the blade assemblies 7, 8 are driven in counter-rotating motion. Material introduced between the two rotating blade assemblies (in a direction essentially perpendicular to the rotational axes) is chopped by the blades 5. The two blade assemblies 7, 8 are resiliently-biased towards each other, for example by a spring mechanism functionally similar to that illustrated in Fig 8. The two blade assemblies are further arranged so as to define a minimum separation 4 between the blades on each assembly as illustrated in Figure 1. The biasing force (e.g. the strength of the spring for a spring-biased system) is chosen such that relatively soft material to be chopped (e.g. plant material) does not cause significant relative movement of blade assemblies when introduced between then, but the introduction of relatively hard material (e.g. stones) will cause the two blade assemblies 7, 8 to separate from each other, allowing the hard material to pass between the assemblies without damage to the blades or blockage of the apparatus. In preferred embodiments, the biasing force is variable.
Figure 3 illustrates a further embodiment of an apparatus of the invention, generally indicated by 6. This again comprises two blade assemblies 7, 8, but in this instance the two assemblies are arranged such that each assembly is driven in the same rotational direction, as illustrated by the arrows 10, 11. Corresponding components of the apparatus in Figure 3 are numbered accordingly.
Figure 4 illustrates a close-up portion of a blade 5 such as the one illustrated in Figure 3, indicated by the dotted line. The figure illustrates a preferred method for forming a blade on the surface of a shell 9. A bar of suitable material, such as steel, is welded to the surface of the shell 9 such that the face of the bar is at an angle to a tangent to the shell; this may be achieved by virtue of the fillet of weld material 12 used to attach the bar. Once the bar (or plurality of bars) used to create the assemble has been attached, the assembly is mounted in a lathe and the tops of the bars are skimmed to create a top surface 13 that has a radius centred on the axis of rotation of the blade assembly. This creates a cutting edge 14 aligned substantially tangential to the cylindrical axis of the blade assembly. The inventor has found that this leads to a blade assembly that is essentially self-sharpening, in use.
Figure 5 illustrates, in plan view, a blade assembly of the present invention, generally indicated by 15. The assembly comprises a cylindrical shell 9 having a central axle 16 that may be mounted for driven rotation about its axis. On the surface of the shell 9 are mounted a plurality of blades 5, arranged along a line substantially parallel to the axis of rotation of the assembly.
Figure 6 illustrates a further embodiment, again in plan view, of a blade assembly of the present invention, generally indicated by 17. Again, the assembly comprises a cylindrical shell 9 with a central axle 16. In this embodiment, a plurality of blades 5 is mounted on the surface of the shell in a generally helical arrangement. The inventor has found that such an arrangement improves chopping efficiency and clearage of debris from between the blades 5 in use.
Figure 7 shows an alternative arrangement of a blade assembly suitable for a chopping apparatus of the invention, generally indicated by 18. In this embodiment, blades 5 are arranged about the surface of a notional cylinder indicated by the dotted line 19. The blades 5 are held in place by spoke elements 20 connected to central axle. The blades themselves define the surface of the notional cylinder, without the need for a supporting shell.
Figure 8 shows, in cross-sectional schematic view a chopping apparatus of the present invention, generally indicated by 21. The apparatus comprises a first blade assembly 7 and a second blade assembly 8, each assembly 7, 8 having a plurality of blades 5 disposed about the surface of a cylindrical shell 9. In an alternative embodiment, the blades may be mounted in a similar fashion to that illustrated in Figure 7, the blades themselves forming a notional shell. Returning to Figure 8, the first blade assembly is driven for rotational movement about its axis 16 by a drive mechanism 22. The second blade assembly 8 is likewise driven for rotational movement about its axis 16 by a second drive mechanism 23. In this embodiment, the second drive mechanism is provided with a controller 24 to enable the speed and/or the direction of rotation of the drive mechanism 23 to be varied to suit the material to be chopped.
   The second blade assembly 8 of the apparatus is resiliently biased towards the first blade assembly 7 by means of a pivotally-mounted arm 25 arranged to swing about a pivot 26. Resilient biasing is provided in this embodiment by means of a spring 27 attached to an attachment point 28. The attachment point 28 may be arranged to be movable towards or away from the swinging arm to provide variable strength biasing if required.
   In preferred embodiments of the apparatus, the drive mechanisms are hydraulic drives. This allows the apparatus to be conveniently powered from hydraulic sources readily found on agricultural machinery, such as tractors and the like. Speed variation of one or both of the drive mechanisms 22, 23 may, in this case be effected by valve arrangements on the hydraulic feed pipes (not illustrated).

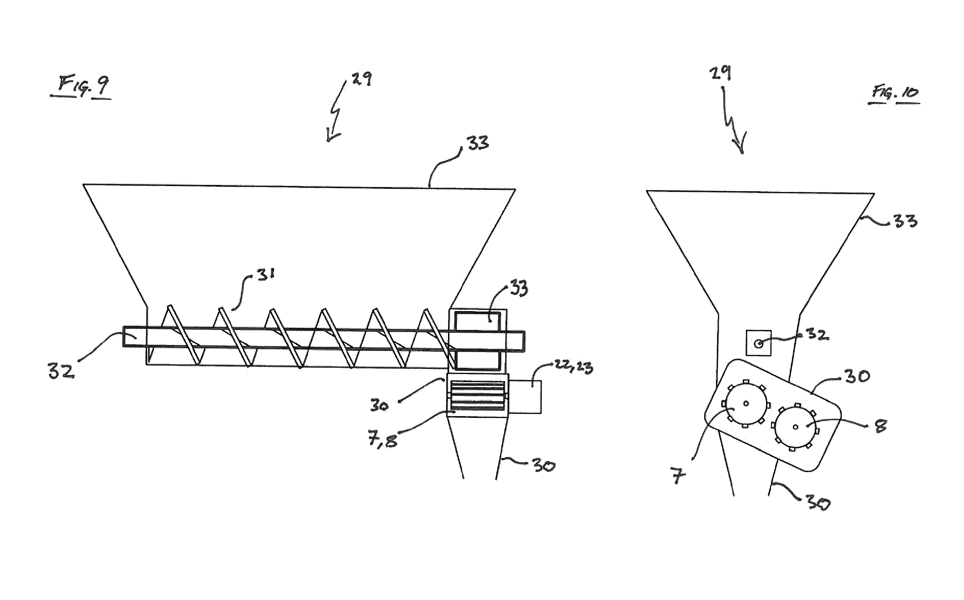

Figure 9 illustrates a further embodiment of chapping apparatus of the present invention, generally indicated by 29, in partial cross-sectional view. In this embodiment, the blade assemblies 7, 8 are housing within a cowling 30, connected to a delivery chute 30. An auger 31 is provided to deliver material, in use, to the blade assemblies. In a typical arrangement, the auger is mounted for rotational movement about an axle 32. One or more paddles 33 are also provided on the axle, mounted in a generally radial fashion. As the auger's axle turns, the paddle(s) 33 serve to push material towards the rotating blade assemblies 7, 8. This embodiment is also provided with hopper, in the form of a loading bucket 33 of the type that may be fitted to apparatus such as a tractor or digger. At least part of the operable portion of the auger 31 is located within the interior of the bucket 33. In this way, material to be chopped may be scooped up from the ground using the loading bucket mounted on a digger and transported, if required to the location where the chopped material is required. Operation of the auger then propels the material towards the blade assemblies where it is chopped and discharged via the chute 30.
Fig 10 illustrates a side view (partially cut-away) of the apparatus of Figure 9.

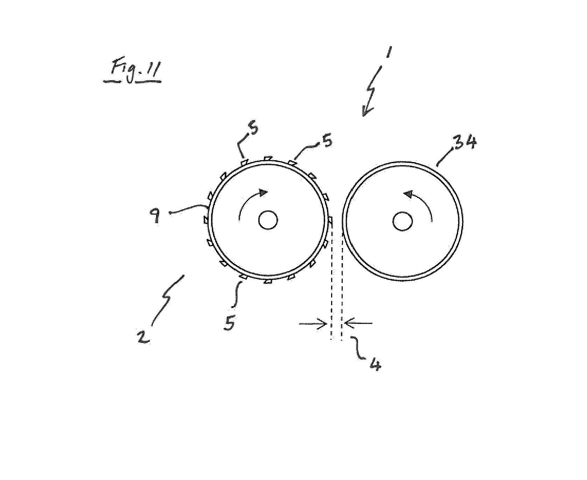

Figure 11 illustrates, in cross-sectional view, part of an embodiment of cutting apparatus 1 of the invention. In this embodiment, the apparatus comprises a first rotatable assembly in the form of a blade assembly 2, and a second rotatable assembly in the form of a driven roller 34. In a similar fashion to previously-described embodiments, the blade assembly 2 comprises a series of elongate blades 5 mounted about the surface of a cylindrical shell 9. Figure 11 is a cross-section perpendicular to the axis of rotation of the cylindrical shell. The second rotatable assembly is in the form of a roller 34 having the form of a cylinder and constructed from hard material such as steel. Separation of the two assemblies is shown by the gap 4, measured between the external cutting edge of the blades 5 and the surface of the roller 34. The inventor has found that the use of a roller in combination with a blade assembly allows for smaller size of material to be chopped up. Where two such blade assemblies are used, material that has a characteristic diameter smaller than twice the blade height plus the separation gap can escape cutting by the apparatus in some configurations, depending on the relative rotation speed and positions of the two blade assemblies. When a roller is used, only material smaller than one blade height plus the separation gap can ever escape cutting.

## Claims

1. Chopping apparatus comprising:
a first and second rotatable assembly, said first rotatable assembly comprising a blade assembly having a plurality of elongate blades arranged about the surface of a notional cylinder, said blades having a cutting edge aligned substantially tangentially to said cylinder; and said second rotatable assembly comprising either a like blade assembly or a roller;
said rotatable assemblies being arranged adjacent each other on substantially parallel axes of rotation; and a drive to rotate each assembly about its cylindrical axis.

2. Chopping apparatus according to Claim 1 wherein said second rotatable assembly is a like blade assembly.

3. Apparatus according to either Claim 1 or Claim 2 wherein said assemblies are resiliently biased towards each other whilst constrained to have a minimum separation between each assembly.

4. Apparatus according to any of Claims 1 to 3 wherein one (only) assembly has a variable speed drive.

5. Apparatus according to any of Claims 1 to 3 wherein each assembly has a variable speed drive.

6. Apparatus according to any of Claims 1 to 5 wherein one (only) blade assembly has a reversible drive.

7. Apparatus according to any of Claims 1 to 5 wherein each assembly has a reversible drive.

8. Apparatus according to any preceding claim further comprising an auger configured to deliver material, in use, between said first and second assemblies.

9. Apparatus according to Claim 8 wherein the axis of rotation of said auger is substantially parallel to the axes of said assemblies and said auger further comprises a paddle configured to push material, in use, between said first and second assemblies.

10. Apparatus according to any preceding claim further comprising a loading bucket wherein the interior of said loading bucket is in operable communication with said assemblies.

11. Apparatus according to either Claim 8 or 9 further comprising a loading bucket wherein the interior of said loading bucket is in operable communication with said assemblies, and wherein said auger is located at least partly within the interior of said loading bucket.

12. Apparatus according to any preceding claim wherein said elongate blades are located on the surface of cylindrical shell.

13. Apparatus according to any preceding claim wherein said elongate blades are arranged helically.

14. Apparatus according to any preceding claim wherein the or each blade assembly is independently driven.

15. Apparatus substantially as described herein with reference to and as illustrated by any appropriate combination of the accompanying drawings.
